(19) Europäisches Patentamt
European Patent Office
Office européen des brevets

(11) EP 0 300 335 B2

(12) NEW EUROPEAN PATENT SPECIFICATION

(45) Date of publication and mention of the opposition decision:
**17.10.2001 Bulletin 2001/42**

(45) Mention of the grant of the patent:
**29.07.1992 Bulletin 1992/31**

(21) Application number: **88111159.5**

(22) Date of filing: **12.07.1988**

(51) Int Cl.[7]: **C14C 11/00**, C08G 18/08, C08G 18/66, C08G 18/12, C08G 18/32

# (54) A method of finishing hide, leather, and like fibrous substrates

Verfahren zum Zurichten von Häuten, Leder und derartigen faserigen Substraten

Procédé de finissage de peaux, de cuir et autres substrats fibreux similaires

(84) Designated Contracting States:
**AT BE CH DE ES FR GB GR LI LU NL SE**

(30) Priority: **22.07.1987 IT 2139487**

(43) Date of publication of application:
**25.01.1989 Bulletin 1989/04**

(73) Proprietor: **CONCERIA CONTI S.p.A.**
**24059 Urgnano (Bergamo) (IT)**

(72) Inventors:
- **Locati, Luigi**
  **I-20058 Villasanta Milan (IT)**
- **Calciati, Giovanni**
  **I-24059 Urgnano Bergamo (IT)**
- **Conti, Ezio**
  **I-24059 Urgnano Bergamo (IT)**
- **Carlessi, Antonio**
  **I-24059 Urgnano Bergamo (IT)**

(74) Representative: **Staub, Gabriela, Dr. Ing. et al**
**c/o INTERNAZIONALE BREVETTI INGG. ZINI, MARANESI & C. S.r.l.,**
**Piazza Castello 1**
**20121 Milano (IT)**

(56) References cited:

| | |
|---|---|
| **EP-A- 0 104 377** | **EP-A- 0 193 808** |
| **DE-A- 2 144 878** | **DE-A- 2 624 422** |
| **DE-A- 2 651 506** | **US-A- 4 501 852** |

Remarks:
The file contains technical information submitted after the application was filed and not included in this specification

EP 0 300 335 B2

## Description

This invention relates to a method of finishing hides, leather, and the like fibrous substrates which is particularly, though not exclusively, useful as a method for upgrading split leather by means of film-forming emulsions of suitable synthetic resins, as applied with a so-called transfer technique using a supporting web of a release paper onto which a thin layer of an aqueous polyurethane emulsion has been applied, the polyurethane of said emulsion being obtained from an isocyanate prepolymer consisting of selected monomers.

In the hide finishing art, and specifically the upgrading of split leather, various treatments have long been proposed which make use of aqueous upgrading agents, in particular of aqueous polyurethane emulsions, directed to eliminate or at least attenuate the serious pollution problem posed by the organic solvents conventionally employed for convenience in handling said upgrading agents. Example of suitable polyurethane emulsions are disclosed in US 4,501,852, EP 0 104 377 and EP 0 193 808.

Experimental work carried out reveals that to obtain a qualified product, that is one whose aesthetics and strenght characteristics compare well with those of natural grain hide, the thickness of the upgrading film should be preferably less than 0.1 mm. With larger thickness dimensions, particularly within the range of 0.2 to 0.4 mm, such as those provided conventionally, it is well recognized that one obtains an outward appearance, touch, and texture which are plastics-like.

Such high thickness coatings of about 0.4 mm are e.g. exemplified in DE-OS 2 144 878. This reference discloses a method for coating leather and textiles comprising applying to such substrates the reaction product of solubilized casein, polyurethanes dispersible in water and formaldheyde. In exemplifying respective polyurethanes isocyanate prepolymers are made from polyesters and diisocyanate monomers and they are applied by a transfer technique obtaining a layer with a thickness of 0.4 mm.

The obtainment of upgrading films with small a thickness as specified above has posed major technical problems as relates to the application of the polyurethane emulsion onto a release paper web, coupling to the split leather material to be upgraded, and the drying procedures and times, especially where the upgrading process is carried out on a continuous basis.

In fact, in the course of the several attempts at implementing upgrading methods of the kind under consideration, it has been almost constantly observed that the end product showed significant and unacceptable "discontinuities" in its upgrading layer, which discontinuities often grew into cracks across its surface. The end product yielded by such attempted upgrading of split leather with aqueous polyurethane emulsions also showed almost invariably poor strength on the flexometer.

To these aggregate drawbacks, a not negligible one should be added which originates from the low throughput of the systems available for implementing upgrading processes. In fact, currently employed systems do not permit of the speed of advance of the release paper web to be kept higher than about 3-4 meters per minute, and the hourly throughput of the entire system is obviously tied to this rate of advance. Attempts made at improving the throughput by increasing the speed of advance of the release paper web have always led to inferior results over the already unsatisfactory ones of low-speed processes. A considerable increase in the surface layer of the upgrading layer pitting and cracking has been observed, in fact.

All of the above-noted shortcomings are basically due to a tough "skin" forming rapidly over the thin layer of aqueous polyurethane emulsion as applied onto the web of release paper, which "skin" constitutes unfortunately an effective barrier to the removal of the water in the emulsion by vaporization as the web of release paper is passed through the drying kilns. The steam thus released succeeds, however, to "break through" the barrier causing, in many cases, the cited pitting and cracking. Understandably, this adverse phenomenon is the more evident the higher is the rate of vaporization of the water from the polyurethane emulsion layer employed. Accordingly, a low rate of advance of the release paper web through drying kilns of considerable length, wherein drying can be performed under mild temperature conditions, should bring about improved characteristics for the resulting upgraded product. But attempts made in this direction have led, on the one side, to obtaining products with yet unsatisfactory aesthetic characteristics, and on the other side, have involved the availability of large size systems, especially as far as the drying kilns are concerned.

The problem underlying this invention is to provide a method of finishing hide, leather, and the like fibrous substrates, in particular for upgrading split leather, which can overcome the above problems by providing an aqueous polyurethane emulsion which is based on an isocyanate prepolymer made of selected monomers which compare favorably with natural grain hide, and this at high hourly throughputs.

This problem is solved, according to the invention, by an emulsion according to claim 4 and a method for finishing hide, leather and the like fibrous substrate and for upgrading split leather according to the so called transfer technique using a supporting web of release paper onto which a thin layer of an aqueous polyurethane emulsion has been applied, the polyurethane of said emulsion being obtained from an isocyanate prepolymer obtained from a diisocyanate monomer having the formula ONC-R'-NCO, where R' is selected from a group consisting of hexamethylene,

isophorone, methylenedicyclohexyl, a polyether monomer selected from a group consisting of

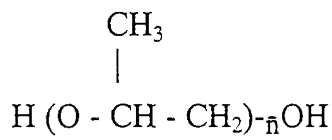

$$H - (O-CH_2-CH_2)-_{\bar{n}}OH$$

$$H(O-CH_2-CH_2-CH_2-CH_2)-_{\bar{n}}OH$$

where $\bar{n}$ is in the 10 to 80 range, and a glycolic monomer containing at least one acid polar group, said isocyanate prepolymer having a number average molecular weight in the 1500 to 3200 range.

The isocyanate prepolymer is obtained from a diisocyanate monomer having the formula ONC-R'-NCO, where R is selected from a group comprising hexamethylene, isophorone, methylenedicyclohexyl, and a polyether monomer selected from a group comprising,

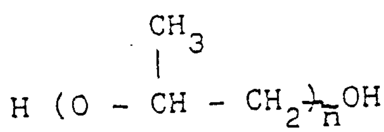

$$H - (O-CH_2-CH_2)_{\bar{n}}OH$$

$$H(O-CH_2-CH_2-CH_2-CH_2)_{\bar{n}}OH$$

where $\bar{n}$ is in the 10 to 80 range, and a glycolic monomer containing at least one acid polar group, preferably a carboxylic group, having the formula,

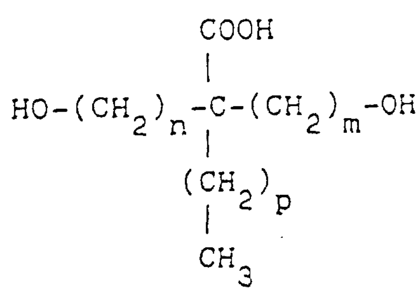

where n and m are in the 1 to 2 range, and p is in the 0 to 1 range.

Preferably, where the polyether is a polypropylene glycol with formula,

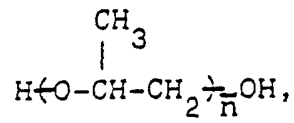

$\bar{n}$ will vary between 16 and 46, in particular between 27 and 40.

Where the polyether is a polyethylene glycol having the formula $H-(O-CH_2-CH_2)_{\bar{n}}-OH$, $\bar{n}$ is within the range of 25 to 80, better still of 40 to 65.

Where the polyether is a polybutylene glycol with formula $H-(OCH_2-CH_2-CH_2-CH_2)_{\bar{n}}-OH$, $\bar{n}$ is within the range of 12 to 42, better still, of 22 to 35.

The presence of glycol with acid polar groups, in particular and preferably of carboxylic glycol in the isocyanate prepolymer, is necessary in order to confer stability on the aqueous emulsion to be produced.

The amount of this carboxylic glycol used for the above-noted purpose is in the range of 3% to 15% by weight of the weight of polyether, preferably between 5% and 10% by weight.

To obtain different rigidities, 5% to 30% (percent by weight of the polyethers) of polyester diols are to be selected from those having the formulae,

$$H-[O-(CH_2)_4-O-CO-(CH_2)_4-CO]_{\bar{n}}-OH$$

where $\bar{n}$ is within the range of 7 to 15;

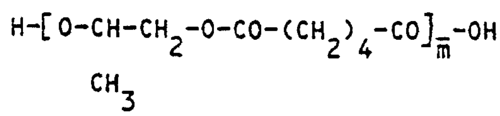

where $\bar{m}$ is in the 8 to 16 range;

$$H-[O-(CH_2)_6-O-CO-(CH_2)_4-CO]_{\bar{p}}-OH$$

where $\bar{p}$ is in the 6 to 14 range. The aqueous polyurethane emulsion suitable for use with this invention is obtained from the isocyanate prepolymer by slowly adding said prepolymer into an aqueous solution containing a tertiary amine, not reacting with the isocyanate groups, to be selected from the amines having the formulae,

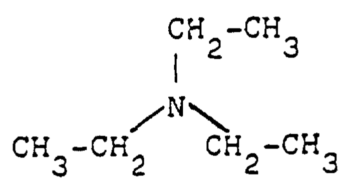

Triethylamine and

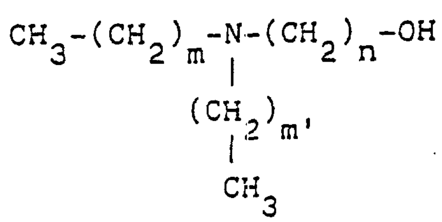

where n is in the 1 to 2 range, and m, m' are in the 0 to 1 range

The amount of the tertiary amine to be dissolved in water is a function of the amount of carboxylic glycol contained in isocyanate prepolymer. The molar ratio of the carboxylic glycol contained in the prepolymer to be emulsified to the amine may be the following,

$$\frac{\text{moles tertiary amine}}{\text{moles carboxylic glycol}} = x$$

where x is the 0.7 to 2.0,
preferably 1.0 to 1.7, range.

The water may optionally contain small amounts (0.3-1.5% by weight of the water) of some non-ionic dispersing agents in order to make the emulsion more stable.

The type of the dispersing agent employed is not specific, and does not affect the applicative characteristics of the end emulsion during the application step, on condition that the amounts used do not exceed the recommended percentages by far.

The prepolymer is added into the solution under powerful agitation. The water temperature should be within the range of 10 ° to 20°C, and that of the prepolymer between 40°C and 70°C.

The viscosity of the resulting solution will depend on the of the amine used, as well as on the proportion of carboxylic glycol in the prepolymer, and may be adjusted by varying these two values within the claimed limits.

After achieving emulsion of the prepolymer, its extension should be brought about by additivating the emulsion with equimolar amounts with respect to the NCO groups in the prepolymer of aliphatic diamines with formulae,

$$H_2N\text{-}(CH_2)_n\text{-}NH_2$$

where n varies between 0 and 6;

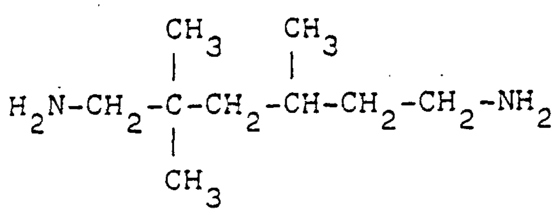

2,2,4 trimethylhexamethylendiamine;

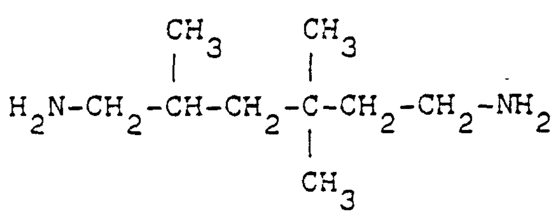

2,4,4 trimethylhexamethylendiamine;

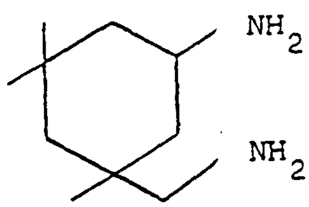

isophoron-diamine.

or some other comparable amines.

The isocyanate prepolymer reacts with the diamine to yield the end polyurethane.

The concentrations of polyurethane in the end emulsion may range by weight from 25% to 50%.

Few minutes after adding the diamine, the polymerization is over and the polyurethane so obtained has a high molecular weight and is suitable for the claimed application.

Using an aqueous polyurethane emulsion according to this invention, it has been unexpectedly found that, over its thin layer spread onto the release paper, there formed a skin which allowed the steam generated within the layer itself to "transpire" on application of heat. This particular unexpected feature has shown to prevent pitting and cracking of the layer, and this also when, in order to raise the hourly throughput, the thermal level during the drying step of said layer was greatly increased while keeping the drier size unaltered.

This remarkable and advantageous feature was then further improved upon by emulsifying the polyurethane of this invention in a water/glycol-ether azeotropic mixture, wherein the glycol-ether present amounted to 5-13% by weight of the weight of water used, which affords a more gradual vaporization of the water even at higher drying temperatures.

Such solvents may be selected from propylenglycolmonomethylether and dipropylenglycolmonomethylether, and the ethylenglycol ethers entered in the following Table.

TABLE

| Glycol ether | PM | EM | EE | EB | DPM |
|---|---|---|---|---|---|
| Boiling point [°C at 1013 mbar (760 mm Hg)] | 120.1 | 124.6 | 135.5 | 171.1 | 168.3 |
| Rate of vaporization (diethylether = 1) | 25 | 35 | 40 | 160 | 530 |
| Flash point (°C, open cup) | 38 | 49 | 49 | 74 | 85 |
| Specific density (25/25 °C) | 0.919 | 0.963 | 0.928 | 0.900 | 0.951 |

PM = propylenglycolmonomethylether
EM = ethylenglycolmonomethylether
EE = ethylenglycolmonoethylether
DPM = dipropylenglycolmonomethylether

The temperatures at which the thin (0.05-0.1 mm) layer of the aqueous polyurethane emulsion according to the invention could be dried enable a speed of advance of up to 8-10 m/minute for the web of release paper, with none of the drawbacks affecting the prior art appearing in the upgraded product.

Further features and advantages will be more apparent from the following description of some examples of preparation of the aqueous polyurethane emulsions according to the invention and a method based on the use of such emulsions. The accompanying drawing shows diagramatically by way of example a system for implementing the method of this invention.

Example 1 (COMPARATIVE)

Polyester (A) = polybutylenglycol adipate $H\text{-}[O\text{-}(CH_2)_4\text{-}O\text{-}CO\text{-}(CH_2)_4\text{-}CO]_{\bar{n}}/OH$ with number-average molecular weight = 2032 ($\bar{n}$ = 10.07)

Polyether (B) = polypropylenglycol

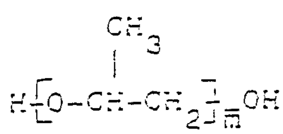

with number-average molecular weight = 1960 ($\bar{m}$ = 33.5)

Within a 2000-liter reactor, as previously made neutral with anhydrous nitrogen, at 70-80°C, 75 kg dimethylpropionic acid (558.8 moles) is dispersed in 100 kg cellosolve acetate (ethylenglycolacetate), thereafter 200 kg molten polyester (A) at 70°C is added along with 800 kg liquid polyester (B) corresponding to 98.4 moles of (A) and 408.2 moles of (B)).

The mixture is all raised to a temperature of 75° C under powerful agitation and while keeping the medium neutral by means of a stream of anhydrous nitrogen at 0.3 $Nm^3$/hour and controlling heating so as to maintain a temperature of 75° ± 3°C.

558.2 kg of 4,4' diisocyanodicyclohexylmethane (2130 moles) is then added, and the temperature lowered to about 65° C; soon afterwards, there is added 0.3 kg of dibutyltin dilaurate, and temperature is allowed to increase to full exothermic completion of the reaction; cooling being only applied on exceeding 110°C.

A temperature in the 100° to 110°C range is maintained for 3 hours while adding, at 30-minute intervals, 0.3 kg dibutyltin dilaurate to an overall consumption of 1.5 kg of this catalyst.

After slow-rate cooling (for about 4 hours) down to a temperature of 55-60° C, the isocyanate groups are titrated. A value of NCO of 5.34% is found (as against a theoretical one of 5.47%) and a molecular weight in the 1500

to 1650 range; the calculated amount of 24% hydrazine hydrate solution required for proper polymerization shows to be equal to 216.6 kg.

Within a 5000-liter reactor equipped with a double helix for powerful stirring, there are-prepared 2223 kg deionized water, 17 kg dispersing agent (oxyethylated nonylphenol with 10 moles ethylene oxide), and 67.7 kg triethylamine.

To this aqueous solution; there is added the isocyanate prepolymer solution at 55-60°C.

The addition is performed while keeping the aqueous solution under powerful agitation, and trying not to exceed 30°C.

After entirely adding the prepolymer solution, 216.6 kg is added of a 24% aqueous solution of hydrazine hydrate.

The temperature of the emulsion thus formed climbs by 8-10°C.

Stirring is maintained for about 30 minutes, and the emulsion so prepared is now ready for use.

Example 2

Using the same equipment as in Example 1, and under identical conditions, a prepolymer is prepared by mixing 1039 kg polybutylenglycol (H-[O-$(CH_2)_4$] $\bar{n}$-OH where $\bar{n}$ = 26.13) with a number-average molecular weight of 1900, 144 kg of N-methylpyrrolidone, and 78.2 kg dimethylolpropionic acid.

Temperature is brought up to 70 ° C and 380.4 kg isophorondiisocyanate and 0.36 kg dibutyltin dilaurate are then added.

The exothermic reaction is allowed to occur, and the same procedure as in Example 1 is followed.

The isocyanate groups are titrated, and a value of 2.77% is obtained for NCO (as against a theoretical one of 2.86%), along with a molecular weight in the 2500 to 2700 range. The stoichiometric hydrazine hydrate is calculated at 110.7 kg.

The aqueous solution is prepared as in Example 1 by dissolving in 2033 kg water 20 kg of dispersing agent (oxyethylated nonylphenol with 10 moles ethylene oxide) and 60 kg dimethylethanolamine.

One proceeds by adding the prepolymer solution to the aqueous solution as described in Example 1, and 110.7 kg of a 24% solution of hydrazine hydrate is then added. Thus, a polyurethane emulsion is obtained which has a solid content of about 38% and a pH in the 9 range.

This emulsion contains the already terminated polyurethane and is ready for use in a hide upgrading process.

Example 3

Using the same equipment and conditions as in Example 1, a prepolymer is prepared by mixing 678.4 kg of polypropylenglycol

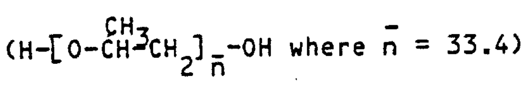

with a number-average molecular weight of 1958, with 120.6 kg N-methylpyrrolidone, 22.2 kg of a polyethylenglycol/polypropylenglycol block copolymer (with a number-average molecular weight of 2000 and a molar % of ethylene oxide = 10%), and 49.9 kg dimethylpropionic acid.

This is brought up to 70°C and a first portion is added of 114.7 kg 4,4' diisocyanodicyclohexylmethane and 0.13 kg dibutyltin dilaurate. The isothermic reaction is allowed to proceed, and upon this raising the temperature to about 85 °C, temperature begins to drop. Then the second portion of 229.4 kg dicyclohexylmethane diisocyanate and 0.13 kg dibutyltin dilaurate is added.

On leaving the exothermic reaction to proceed, temperature reaches approximately 110°C.

At 30-minute intervals, there are added portions of 0.13 kg dibutyltin dilaurate to an overall amount of 0.65 kg catalyst. This is then allowed to cool for about 5 hours down to a temperature of 60°C, and the prepolymer is ready to be emulsified (NCO = 3.31%; M.W. = 2200-2350).

The aqueous solution is prepared, in accordance with the procedure outlined in Example 1, with 1842 kg demineralized water, 15.8 kg dispersing agent, and 62.0 kg dimethylethanolamine.

The prepolymer is emulsified in said aqueous solution and 98.0 kg of 24% aqueous hydrazine hydrate is then added.

The emulsion yielded has a dry content of 35% and a pH in the 9 to 10 range.

With reference to the drawing view, a web 1 of a release paper, unwound from a reel 2, is preliminarily treated,

through a pre-finish station 3, with a solution of a conventional protective release agent and subsequently dried in a kiln, such as a gas-fired kiln 4. On exiting the kiln 4, the release paper web is applied a layer as thin as 0.05-0.1 mm of the aqueous polyurethane emulsion according to Example 3 above. This application is preferably performed through a station 5 using a doctoring blade 6 whereby the small thicknesses sought for said layer can be controlled and adjusted. On exiting the station 5, the web of release paper is dried through a kiln 7, which may be gas-fired, the internal temperature whereof is controlled to be within the range of 70° C to 90° C. On exiting this kiln 7, over the first polyurethane layer presently dried, there is spread a second layer of the same aqueous polyurethane emulsion. This application is preformed in a booth 8 using a spraying technique by means of Airless guns and feed pumps.

On exiting the booth 8, over the layer of aqueous polyurethane emulsion (forming essentially a cement), there is laid and pressed down a split leather 9 to be upgraded. Pressing is accomplished by means of a pressure roller pair 10, 11 subjected to a controllable pressure, with the interposition of a protective paper sheet 12. On completion of the split leather pressure application, the web of release paper is passed through a final kiln 13 where the final drying step is carried out, with the kiln heated to a temperature which can be regulated to lie in the 70° to 90°C range. On exiting the kiln 13, the upgraded split leather is recovered by removal off the underlying release paper web which is, in turn, taken up on a specially arranged reel 14.

From checks carried out in a strict manner at the outlet of the drying kiln for the first layer of polyurethane and on the upgraded end product, no pitting or cracking or the like indications of discontinuities in the coating are apparent. The upgraded split leather shows a faultless finish, and the thickness of the polyurethane film is within the range of 0.08 to 0.1 mm.

On inspection by tanning industry experts, split leather upgraded with the method of this invention were found comparable to and much the same as natural grain hide, although not actually to be mistaken therefor.

It should be noted that the above unexpected results were achieved at a rate of advance of the web 1 on the order of 6 meters per minute.

Also noteworthy is that the overall length of the system provided for implementing the inventive method was 50 m, with the overall length of the drying kilns at 28 m.

With the same system as outlined herein above, and through identical process steps, the aqueous polyurethane emulsion of Example 2 has been used to upgrade split leather, and obtain the same results from both the standpoint of the quality of the upgraded product and the technical standpoint.

The aqueous polyurethane emulsion of Example 2 has been additivated with a glycol ether in an amount between 7% and 13% by weight over the water, to substantially yield an azeotropic emulsion of that same polyurethane.

Using the same system as outlined herein above, the method of this invention may be implemented by raising the operating temperatures of the several kilns to values in the 90 ° to 120 ° C range, thereby the rate of advance of the web of release paper can be brought up to 8 m/min.

The consequent increase in the hourly production rate of upgraded split leather has shown, also in the latter case, none of the faults exhibited by the cited prior art.

Comparable excellent results have been obtained with the molecular weight of the prepolymer changed from 1500 to 3200.

By reacting a polyether having the formula,

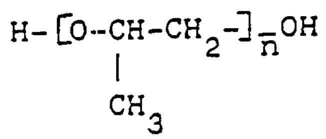

where $\bar{n}$ = 33.7

a polyester diol having the formula,

$$H\text{-}[O\text{-} (CH_2)_4\text{-} O\ \text{-}CO\text{-}(CH_2)_4\text{-}CO]_{\bar{m}}\text{-} OH$$

where $\bar{m}$ = 10.2 a carboxylated diol having the formula,

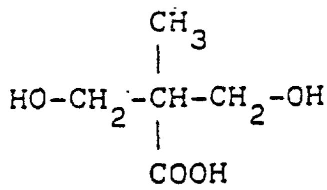

a diisocyanate such as 4,4' diisocyanodicyclohexylmethane

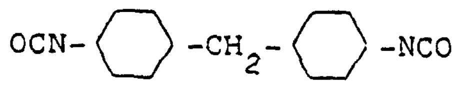

using the same procedure and percentages as specified in Example 1, an isocyanate prepolymer can be obtained which, when emulsified in accordance with the procedure described in Example 1 and polymerized to the highest possible molecular weight, yields a polyurethane emulsion which, when applied in accordance with the foregoing specifications, using the the system outlined herein above and with the expedient of adding about 10% glycol ether over the water, it has been possible to increase the temperatures of the drying kilns up to 130-135 °C, and improve the throughput up to a web rate of advance of 10 m/min. without incurring surface cracking or pitting.

Split leather processed in accordance with the inventive method has consistently shown characteristics which are quite comparable to those of a natural grain hide, as well as an ability to accept various patterns of different hide grains, such as natural grain oxhide and goatskin, paddling, crimped and fancy patterns. From the mechanical standpoint, split leather upgraded with the method of this invention exhibit uncommon strength both as regards flexural strength and strength in the dry and wet states; high resistance to abrasion, thereby it can be advantageously and surely used utilized in the manufacture of leather goods, traditional shoes, sport shoes, etc. The thin (0.05-0.1 mm) upgrading film affords fleshing of the split leather in quite the same way as natural grain hide fleshing: As a result, split leather upgraded with the method of this invention rate quite high commercially despite their being a byproduct of the tanning industry.

Not to be ignored is the fact that environmental protection is ensured by the use of water-based polyurethane emulsions.

## Claims

1. A method for finishing hide, leather and the like fibrous substrate and for upgrading split leather according to the so called transfer technique using a supporting web of release paper onto which a thin layer of an aqueous polyurethane emulsion has been applied, the polyurethane of said emulsion being obtained from an isocyanate prepolymer obtained from a diisocyanate monomer having the formula ONC-R'-NCO, where R' is selected from a group consisting of hexamethylene, isophorone, methylenedicyclohexyl, a polyether monomer selected from a group consisting of

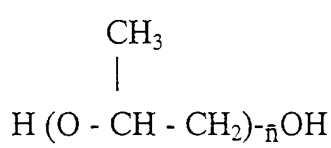

$$H - (O-CH_2-CH_2)-_{n}OH$$

$$H(O-CH_2-CH_2-CH_2-CH_2)-_{n}OH$$

where $\bar{n}$ is in the 10 to 80 range, and a glycolic monomer containing at least one acid polar group, said isocyanate prepolymer having a number average molecular weight in the 1500 to 3200 range.

**2.** A method according to claim 1 **characterized in that** the polyurethane concentration in said aqueous emulsion is within the range of 25% to 50% by weight.

**3.** A method according to claim 2, **characterized in that** said aqueous emulsion is additivated with 5% to 15% by weight of glycol ether based on the water weight to obtain a water/glycol ether azeotrope.

**4.** An aqueous emulsion of a polyurethane for finishing hide, leather and the like fibrous substrates and for upgrading split leather comprising 25% to 50% by weight of said polyurethane, **characterized in that** said polyurethane is obtained from an isocyanate prepolymer obtained from a diisocyanate monomer having the formula ONC-R'-NCO, where R' is selected from a group consisting of hexamethylene, isophorone, methylenedicyclohexyl, a polyether monomer selected from a group consisting of

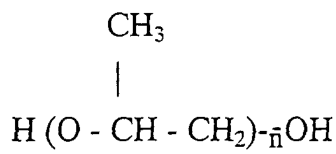

$$H-(O-CH_2-CH_2)-_{\bar{n}}OH$$

$$H(O-CH_2-CH_2-CH_2-CH_2)-_{\bar{n}}OH$$

where $\bar{n}$ is in the 10 to 80 range, and a glycolic monomer containing at least one acid polar group, said isocyanate prepolymer having a number-average molecular weight within the range of 1500 to 3200.

**5.** An aqueous emulsion of a polyurethane according to claim 4
**characterized in that** it comprises a water/glycol ether azeotrope.

**Patentansprüche**

**1.** Ein Verfahren zur Verarbeitung von Haut, Leder und ähnlichem Fasersubstrat und zur Aufwertung von gespaltenem Leder nach dem sogenannten Transferverfahren unter Verwendung eines tragenden Gewebes aus Releasepapier, auf welches eine dünne Schicht einer wässerigen Polyurethanemulsion aufgetragen wurde, wobei das Polyurethan der Emulsion aus einem Isocyanat-Vorpolymer erhalten wird, das aus einem Diisocyanat-Monomer mit der Formel ONC-R'-NCO erhalten wird, worin R' gewählt ist aus einer Gruppe bestehend aus Hexamethylen, Isophoron, Methylendicyclohexyl, einem Polyethermonomer gewählt aus der Gruppe bestehend aus

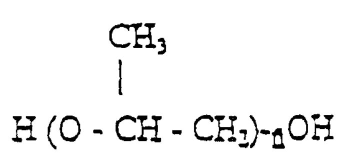

$$H-(O-CH_2-CH_2)-_{\bar{n}}OH$$

$$H(O-CH_2-CH_2-CH_2-CH_2)-_{\bar{n}}OH$$

worin $\bar{n}$ im Bereich von 10 bis 80 liegt, und einem Glykolmonomer, das mindestens eine saure polare Gruppe enthält, wobei das Isocyanat-Vorpolymer ein durchschnittliches Molekulargewicht im Bereich von 1500 bis 3200 besitzt.

**2.** Ein Verfahren gemäß Anspruch 1, **dadurch gekennzeichnet, daß** die Polyurethankonzentration in der wässerigen Emulsion innerhalb des Bereichs von 25 Gewichts-% bis 50 Gewichts-% liegt.

**3.** Ein Verfahren gemäß Anspruch 2, **dadurch gekennzeichnet, daß** der wässerigen Emulsion 5 Gewichts-% bis 15 Gewichts-% Glykolether, basierend auf dem Gewicht des Wassers, hinzugefügt wurden, um ein Wasser/Glykolether-Azeotrop zu ergeben.

**4.** Eine wässerige Emulsion eines Polyurethans zur Verarbeitung von Haut, Leder und ähnlichem Fasersubstrat und zur Aufwertung von gespaltenem Leder, die 25 Gewichts-% bis 50 Gewichts-% des Polyurethans umfaßt, **dadurch gekennzeichnet, daß** das Polyurethan aus einem Isocyanat-Vorpolymer erhalten wird, das aus einem Diisocyanat-Monomer mit der Formel ONC-R'-NCO erhalten wird, worin R' gewählt ist aus einer Gruppe bestehend aus Hexamethylen, Isophoron, Mathylendicyclohexyl, einem Polyethermonomer gewählt aus der Gruppe bestehend aus

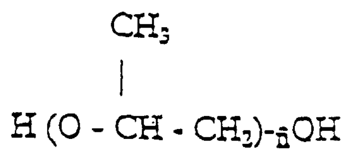

$$H-(O-CH_2-CH_2)-_{\bar{n}}OH$$

$$H(O-CH_2-CH_2-CH_2-CH_2)-_{\bar{n}}OH$$

worin $\bar{n}$ im Bereich von 10 bis 80 liegt, und einem Glykolmonomer, das mindestens eine saure polare Gruppe enthält, wobei das Isocyanat-Vorpolymer ein durchschnittliches Molekulargewicht im Bereich von 1500 bis 3200 besitzt.

**5.** eine wässerige Emulsion eines Polyurethans gemäß Anspruch 4, **dadurch gekennzeichnet, daß** sie ein Wasser/Glykolether-Azeotrop umfaßt.

## Revendications

**1.** Procédé de finissage de peau, cuir et substrat fibreux, de valorisation de croûtes de cuir selon la technique dite de transfert mettant en oeuvre un tissu support de papier détachable sur lequel une fine couche d'une émulsion aqueuse de polyuréthane a été appliquée, le polyuréthane de ladite émulsion étant obtenu à partir d'un prépolymère d'isocyanate obtenu à partir d'un monomère diisocyanate de formule ONC-R'-NCO où R' est choisi dans le groupe constitué d'hexaméthylène, d'isophorone, de méthylènedicyclohexyle, et d'un monomère polyether choisi dans le groupe constitué des monomères de formules :

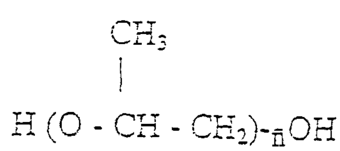

$$H-(O-CH_2-CH_2)-_{\bar{n}}OH$$

$$H(O-CH_2-CH_2-CH_2-CH_2)-_nOH$$

où

n est compris dans la plage allant de 10 à 80, et d'un monomère glycolique contenant au moins un groupe acide polaire, ledit prépolymère d'isocyanate présentant une masse moléculaire moyenne en nombre comprise dans la plage allant de 1500 à 3200.

**2.** Procédé selon la revendication 1 **caractérisé en ce que** la concentration de polyuréthane dans ladite émulsion aqueuse est comprise dans la plage allant de 25 à 50% en poids.

**3.** Procédé selon la revendication 2, **caractérisé en ce que** l'on rajoute à ladite émulsion aqueuse de 5 à 15% en poids d'un éther glycolique par rapport au poids de l'eau de façon à obtenir un azéotrope eau/éther glycolique.

**4.** Emulsion aqueuse d'un polyuréthane pour le finissage de peau, cuir et substrat fibreux et la valorisation de croûtes de cuir, comprenant 25% à 50% en poids dudit polyuréthane, **caractérisé en ce que** ledit polyuréthane est obtenu à partir d'un prépolymère d'isocyanate obtenu à partir d'un monomère diisocyanate de formule ONC-R'-NCO, où R' est choisi dans le groupe constitué de l'héxaméthylène, de l'isophorone,du méthylènedicyclohexyle, d'un monomère polyéther choisi dans le groupe constitué des composés de formule :

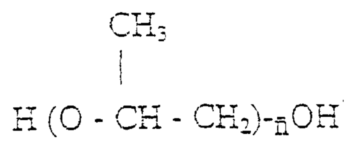

$$H-(O-CH_2-CH_2)-_nOH$$

$$H(O-CH_2-CH_2-CH_2-CH_2)-_nOH$$

n est compris dans la page allant de 10 à 80 et un monomère glycolique contenant au moins un groupe polaire acide, ledit prépolymère d'isocyanate présentant une masse moléculaire moyenne en nombre comprise entre 1 500 et 3 200.

**5.** Emulsion aqueuse d'un polyuréthane selon la revendication 4 **caractérisée en ce qu'**elle comprend un azéotrope eau/éther glycolique.

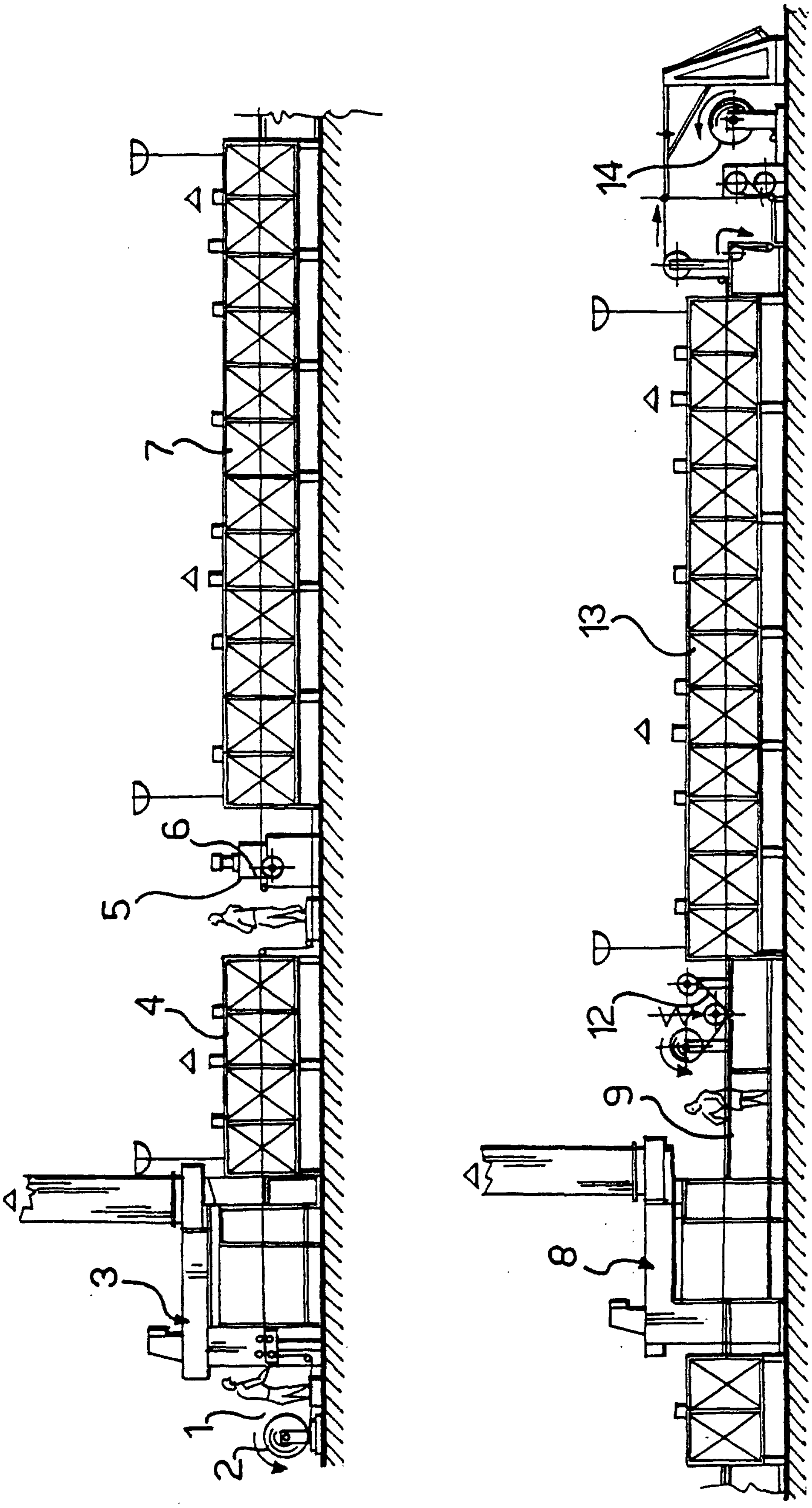
1
2
3
4
5
6
7
8
9
12
13
14